# EUROPEAN PATENT APPLICATION

(11) **EP 2 919 181 A1**
(43) Date of publication of application: **16.09.2015**
(21) Application number: 14197359.4
(22) Date of filing: 11.12.2014
(51) Int. Cl.: G06Q 30/06

(54) **Methods and systems for determining consumer entitlements for playback interoperability**

(30) Priority: 14.03.2014 US 201461953535 P; 20.05.2014 US 201414282977
(71) Applicant: Disney Enterprises, Inc., Burbank, CA 91521 (US)
(72) Inventor: DRAKE, Edward C., Stevenson Ranch, CA California 91381 (US); ARANA, Mark, Burbank, CA California 91521 (US)
(74) Representative: Isarpatent

(57) **Abstract**

An example system includes a database having a plurality of data structures, each of the plurality of data structures associated with a different business rule and one or more provider identifications, and a processor configured to receive one or more consumer identifications and one of the one or more provider identifications, search the plurality of data structures for one or more data structures associated with the one of the one or more provider identifications to identify authorized data structures, in the authorized data structures, determine entitlements associated with the one or more consumer identifications to identify consumer entitlements, generate a list of the consumer entitlements, and transmit the list of the consumer entitlements in response to the receiving.

## Description

### BACKGROUND

When a consumer purchases a digital video disc (DVD) from a retailer, the consumer is assured that the DVD is able to play on any DVD player. However, that is not the case with current digital products that are protected with digital rights management (DRM) algorithms or some other type of security and playback control. For example, in today's digital world, if a user purchases Movie A from Retailer 1 and would like to watch it on Retailer 2's system, the user will be required to re-purchase Movie A from Retailer 2. As such, there is a fundamental lack of interoperability between digital retail stores.

### SUMMARY

The present disclosure is directed to methods and systems for determining consumer entitlements for playback interoperability, substantially as shown in and/or described in connection with at least one of the figures, as set forth more completely in the claims.

### BRIEF DESCRIPTION OF THE DRAWINGS

Figure 1 presents a system used for determining consumer entitlements for playback interoperability, according to one implementation of the present disclosure.
Figure 2 presents a database device for use in the system of Figure 1 for determining consumer entitlements for playback interoperability, according to one implementation of the present disclosure.
Figure 3 shows an example flowchart illustrating a method for determining consumer entitlements for playback interoperability, according to one implementation of the present disclosure.

### DETAILED DESCRIPTION

The following description contains specific information pertaining to implementations in the present disclosure. The drawings in the present application and their accompanying detailed description are directed to merely exemplary implementations. Unless noted otherwise, like or corresponding elements among the figures may be indicated by like or corresponding reference numerals. Moreover, the drawings and illustrations in the present application are generally not to scale, and are not intended to correspond to actual relative dimensions.

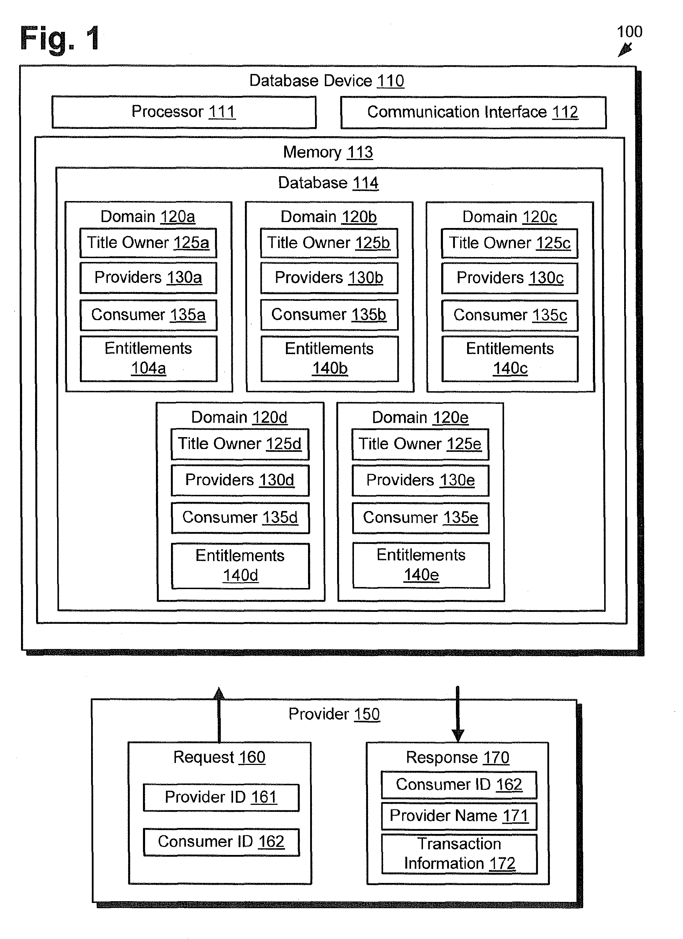

Figure 1 presents a system used for determining consumer entitlements for playback interoperability, according to one implementation of the present disclosure. System 100 of Figure 1 includes database device 110 and provider 150. Database device 110 includes processor 111, communication interface 112, and memory 113. Memory 113 includes database 114, which includes domain 120a, domain 120b, domain 120c, domain 120d, and domain 120e, collectively referred to as domains 120. Domain 120a, domain 120b, domain 120c, domain 120d and domain 120e each respectively include title owner 125a, title owner 125b, title owner 125c, title owner 125d, and title owner 125e, collectively referred to as title owners 125, providers 130a, providers 130b, providers 130c, providers 130d, and providers 130e, collectively referred to as providers 130, and consumers 135a, consumers 135b, consumers 135c, consumers 135d, and consumers 135e, collectively referred to as consumers 135, and entitlement 140a, entitlements 140b, entitlements 140c, entitlements 140d, and entitlements 140e, collectively referred to as entitlements 140. Provider 150 transmits request 160 and receives response 170. Request 160 includes provider identification (ID) 161, and consumer identification (ID) 162. Response 170 includes consumer identification 162, provider name 171, and transaction information 172.

Database device 110 may be a server, a personal computer, a mobile phone, a tablet, or any other device capable of searching through domains 120 for providers 130 and entitlements 140. As shown in Figure 1, database device 110 includes processor 111 and memory 113. Processor 111 may be configured to access memory 113 to store received input or to execute commands, processes, or programs stored in memory 113, such as database 114. Processor 111 may be a processing device, such as a microprocessor or similar hardware processing device, or a plurality of hardware devices. However, in other implementations processor 111 refers to a general processor capable of performing the functions required of database device 110. Memory 113 is capable of storing commands, processes, and programs for execution by processor 111. Memory 113 may be instituted as ROM, RAM, flash memory, or any sufficient memory capable of storing a set of commands. In other implementations, memory 113 may correspond to a plurality memory types or modules.

Database device 110 further includes communication interface 112. In the implementation of Figure 1, communication interface 112 includes any device that is capable both transmitting data with a transmitter and receiving data with a receiver. Processor 111 of database device 110 is thus configured to control communication interface 112 to communicate with other electronic devices, such as provider 150. As such, communication interface 112 can utilize, for example, one or more of Wireless Fidelity (Wi-Fi), Worldwide Interoperability for Microwave Access (WiMax), ZigBee, Bluetooth, Bluetooth low energy, Algorithm Division Multiple Access (CDMA), Evolution-Data Optimized (EV-DO), Global System for Mobile Communications (GSM), Long Term Evolution (LTE), and other types of wired and wireless technology.

Also illustrated in Figure 1, memory 113 of database device 110 includes database 114, which includes domains 120. Domains 120 may include data structures that record entitlements purchased by consumers from providers, where the data structures are associated with business rules for title owners. As such, domains 120 include title owners 125, providers 130, consumers 135, and entitlements 140. Title owners 125 may include the producer, broadcaster, copyright holder, author, or assignee of entitlements 140, such as an individual artist or composer, a media group, a film production studio, an animation studio, a television studio, or a movie distributor. As such, entitlements 140 may include creative media works or projects, such as movies, games, apps, digital books and music. Such creative media works or projects may also include a musical composition or album, a radio program, a video clip, a full-length movie or animation, an episode of a drama or television series, an interactive videogame, or any other type of audiovisual work or content. Providers 130 may include distributors or providers of entitlements 140 for Title Owners 125 according to the business rules for domains 120, as will be explained in more detail below. Finally, consumers 135 may include the identities of consumers that purchased entitlement 140 from providers 130.

It should be noted that in one implementation, domains 120 record providers 130 and consumers 135 using provider identifications and consumer identifications, respectively. In such an implementation, when a provider queries database device 110 for a list of entitlements purchased by a consumer from providers, the query includes a provider identification for the provider and a consumer identification for the consumer. Furthermore, as will be discussed in more detail below, the consumer identification may include a global identification that is assigned to the consumer by multiple providers, or the consumer identification may include a specific identification for the consumer that is assigned to the consumer by a single provider.

As discussed above, domains 120 are associated with business rules for each of title owners 125. For example, domains 120 may be associated with a geographic region, such as a city, state, country, continent, or region, and include providers in the geographic region. For a second example, domains 120 may be associated with a type of media for entitlements 140, such as entitlements 140 that are played on the web or entitlements 140 that are played on television, and include providers that distribute entitlements 140 using the specific type of media. For a third example, domains 120 may be associated with premier providers 130, which would include providers that have access to new releases of entitlements 140 as opposed to providers that only have access to existing entitlements 140. Finally, for a fourth example, domains 120 may be associated with a window of time, which may include providers that have access to entitlements 140 during a specific time period, such as for a week or a month.

For example, and using the implementation of Figure 1, title owners 125a-c of domains 120a-c may each include Disney, and title owners 125d-e of domains 120d-e may each include Sony Pictures, where each of Disney and Sony Pictures are producers of entitlements 140. In such an example, domain 120a may include a premier domain that includes a list of all Disney premier providers, such as providers 130a. Domain 120b may include a geographic domain that includes a list of all Disney providers in North America, such as providers 130b. Domain 120c may include a media type domain that includes a list of all Disney providers streaming entitlements on the web, such as providers 130c. Domain 120d may include a media type domain that includes a list all Sony Pictures providers streaming entitlements on the web, such as providers 130d. Finally, domain 120e may include a geographic domain that includes a list of all Sony Pictures providers in North America, such as providers 130e.

It should be noted that the implementation of Figure 1 illustrates database device 110 storing five domains 120 in memory 113, however, the present disclosure is not limited to the implementation of Figure 1. In other implementations, database device 110 may store more or less than five domains in memory 113. For example, database device 110 may store one domain in memory 113 or database device 110 may store one hundred domains in memory 113. Furthermore, still in other implementations, database device 110 may only store a few of domains 120 or none of domains 120 in memory 113. For example, some or all of domains 120 may be stored on a separate device, such as a separate server. In such an example, database device 110 would utilize communication interface 112 to communicate with the separate device to access domains 120.

Also illustrated in Figure 1, system 100 includes provider 150. As discussed above, providers 130 may include distributors or providers of entitlements 140 for title owners 125. As such, provider 150 may include one of providers 130. For example, providers 130 may include Cool Movies, iTunes, Cinema Now, Telcast, Amazon, and Zune, where each of providers 130 is a distributor or provider of entitlements 140 (such as movies) for title owners 125. In such an example, provider 150 may include one of providers 130, such as Amazon.

Also illustrated in Figure 1, provider 150 transmits request 160 to database device 110. Provider 150 may transmit request 160 to database device 110 using any suitable means of communication. For example, provider 150 may transmit request 160 to database device 110 using, but not limited to, one or more of Wireless Fidelity (Wi-Fi), Worldwide Interoperability for Microwave Access (WiMax), ZigBee, Bluetooth, Bluetooth low energy, Algorithm Division Multiple Access (CDMA), Evolution-Data Optimized (EV-DO), Global System for Mobile Communications (GSM), Long Term Evolution (LTE), and other types of wired and wireless technology.

Request 160 may include a query transmitted by provider 150 to database device 110 that is used by provider 150 to determine a specific consumer's entitlements. As such, request 160 includes provider identification 161 and consumer identification 162. Provider identification 161 includes data that identifies provider 160, and consumer identification 162 includes data that identifies a specific consumer for which provider 150 is inquiring about. For example, and using the example above where one of providers 130 includes Amazon, provider identification 161 may include data that identifies Amazon as provider 150, and consumer identification 162 may include data that identifies John Doe, where John Doe is a consumer that has purchased entitlements 140 from Amazon.

It should be noted that, as discussed above, consumer identification 162 may include a global identification that is assigned to the consumer by multiple providers, or consumer identification 162 may include a specific identification for the consumer that is assigned to the consumer by a single provider. For example, and using the example above where provider 150 includes Amazon, consumer identification 162 may be assigned to the consumer by Amazon. In such an example, consumer identification 162 would be specific to Amazon. For another example, consumer identification 162 may be a global identification for the consumer that is assigned to the consumer by all of providers 130.

Also illustrated in Figure 1, database device 110 transmits response 170 to provider 150 in response to receiving request 160 from provider 150. Database device 110 may transmit response 170 to provider 150 using any suitable means of communication. For example, and as discussed above, database device 110 may transmit response 170 to provider 150 using, but not limited to, one or more of Wireless Fidelity (Wi-Fi), Worldwide Interoperability for Microwave Access (WiMax), ZigBee, Bluetooth, Bluetooth low energy, Algorithm Division Multiple Access (CDMA), Evolution-Data Optimized (EV-DO), Global System for Mobile Communications (GSM), Long Term Evolution (LTE), and other types of wired and wireless technology.

Response 170 may include a data packet that lists entitlements purchased by a consumer that corresponds to consumer identification 162 of request 160. As such, response 170 includes consumer identification 162, provider name 171, and transaction history 172. As discussed above, consumer identification 162 includes data that identifies the specific consumer for which provider 150 is inquiring about. Provider name 171 includes data that identifies all of the providers that the consumer corresponding to consumer identification 162 has had a transaction with for entitlements. Finally, transaction history 172 includes data that identifies all entitlements that the specific consumer corresponding to consumer identification 162 has purchased.

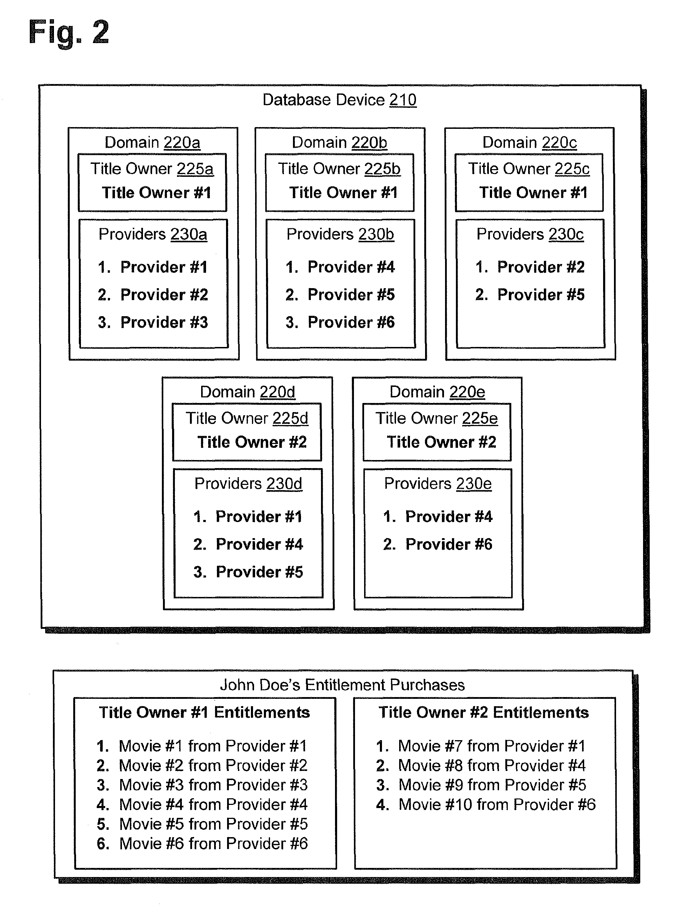

In the implementation of Figure 1, provider 150 transmits request 160 to database device 110 to inquire about entitlements for a consumer. Database device 110 receives request 160 from provider 150 and searches through domains 120 using provider identification 161 and consumer identification 162 from request 160, which is described in detail with regards to Figure 2. After searching through domains 120 for the consumer's entitlements, database device 110 generates response 170, where response 170 includes consumer identification 162, provider name 171, and transaction information 172. Finally, database device 110 transmits response 170 to provider 150.

It should be noted that the implementation of Figure 1 only illustrates database device 110 as including processor 111 and communication interface 112; however, provider 150 may further include a processor and a communication interface. For example, in one implementation, provider 150 may include, but is not limited to, a server, a personal computer, a mobile phone, a tablet, or any other device capable of inquiring about a consumer's entitlements by transmitting request 160 to database device 110. In such an implementation, a processor of provider 150 would transmit request 160 to database device 110 and receive response 170 from database device 110 using a communication interface of provider 150.

Figure 2 presents database device 210 for use in system 100 for determining consumer entitlements for playback interoperability, according to one implementation of the present disclosure. Database device 210includes domain 220a, domain 220b, domain 220c, domain 220d, and domain 220e, collectively referred to as domains 220. Domain 220a, domain 220b, domain 220c, domain 220d, and domain 220e respectively include title owner 225a, title owner 225b, title owner 225c, title owner 225d, and title owner 225e, collectively referred to as title owners 225, and providers 230a, providers 230b, providers 230c, providers 230d, and providers 230e, collectively referred to as providers 230. Database 200 further includes John Doe's Entitlement Purchases.

With regards to Figure 2, it should be noted that database device 210, domain 220a, domain 220b, domain 220c, domain 220d, and domain 220e, owner 225a, title owner 225b, title owner 225c, title owner 225d, and title owner 225e, and providers 230a, providers 230b, providers 230c, providers 230d, and providers 230e correspond respectively to database device 110, domain 120a, domain 120b, domain 120c, domain 120d, and domain 120e, title owner 125a, title owner 125b, title owner 125c, title owner 125d, and title owner 125e, providers 130a, providers 130b, providers 130c, providers 130d, and providers 130e from Figure 1. Furthermore, many features have been left out of Figure 2 for clarity purposes.

As illustrated in the example of Figure 2, database device 210 includes domains 220a-c for Title Owner #1 and domains 220d-e for Title Owner #2. As discussed above, title owners 220 may include the producer, broadcaster, copyright holder, author, or assignee of entitlements, such as an individual artist or composer, a media group, a film production studio, an animation studio, a television studio, or a movie distributor. For example, Title Owner #1 may correspond to Disney, and Title Owner #2 may correspond to Sony Pictures.

As further illustrated in the example Figure 2, each of domains 220 include a unique set of providers 230. For example, domain 220a includes Provider #1, Provider #2, and Provider #3, domain 220b includes Provider #4, Provider #5, and Provider #6, domain 220c includes Provider #2 and Provider #5, domain 220d includes Provider #1, Provider #4, and Provider #5, and domain 220e includes Provider #4 and Provider #6. As discussed above, providers 230 may include distributors or providers of entitlements. For example, Provider #1 may include Cool Movies, Provider #2 may include iTunes, Provider #3 may include Cinema Now, Provider #4 may include Telcast, Provider #5 may include Amazon, and Provider #6 may include Zune.

Furthermore, in the example of Figure 2, domains 220 may be associated with business rules for title owners 225. For example, and as discussed above with regards to Figure 1, domain 220a may include a premier domain that includes a list of all Title Owner #1 premier providers, such as providers 230a. Domain 220b may include a geographic domain that includes a list of all Title Owner #1 providers in North America, such as providers 230b. Domain 220c may include a media type domain that includes a list of all Title Owner #1 providers streaming entitlements on the web, such as providers 230c. Domain 220d may include a media type domain that includes a list all Title Owner #2 providers streaming entitlements on the web, such as providers 230d. Finally, domain 220e may include a geographic domain that includes a list of all Title Owner #2 providers in North America, such as providers 230e.

Also illustrated in the example of Figure 2 is John Doe's Entitlement Purchases. John Doe's Entitlement Purchases includes a list of all entitlements that John Doe has purchased from providers 230. For example, John Doe has purchased six of Title Owner #1's movies, which include Movie #1 from Provider #1, Movie #2 from Provider #2, Movie #3 from Provider #3, Movie #4 from Provider #4, Movie #5 from Provider #5, and Movie #6 from Provider #6. Furthermore, John Doe has purchased four of Title Owner #2's movies, which include Movie #7 from Provider #1, Movie #8 from Provider #4, Movie #9 from Provider #5, and Movie #10 from Provider #6.

In the Example illustrated in Figure 2, database device 210 may receive a query request from a provider for a consumer's entitlements, such as database device 110 receiving request 160 from provider 150 from Figure 1. For example, database device 210 may receive a request from Provider #5 for John Doe's entitlements, where the request includes the identity of Provider #5 and the identity of John Doe. In response to receiving the request from the provider, database device 210 first uses the identity of the provider to determine authorized domains for the provider, where the authorized domains correspond to the domains that include the provider (which may be recorded using the identification of the provider). For example, and using the example above where database device 210 receives a request from Provider #5 for John Doe's entitlements, authorized domains for Provider #5 would include domain 220b, domain 220c, and domain 220d.

After determining authorized domains for the provider, database device 210 next uses the consumer identification from the request to determine the consumer's entitlements from the authorized domains. For example, and using the example above where database device 210 receives a request from Provider #5 for John Doe's entitlements, database device 210 determines John Doe's entitlements from the authorized domains for Provider #5. In such an example, John Doe's entitlements would include Movie #2 from Provider #2, Movie #4 from Provider #4, Movie #5 from Provider #5, Movie #6 from Provider #6, Movie #7 from Provider #1, Movie #8 from Provider #4, and Movie # 9 from Provider #5. This is because the authorized domains for Provider #5 are domain 220b, domain 220c, and domain 220d, but not domain 220a and domain 220e. As such, the authorized domains for Provider #5 do not include Title Owner #1's entitlements provided by Provider #1 and Provider #3, and Title Owner #2's entitlements provided by Provider #6.

After determining the consumer's entitlements for the consumer from the request received by the provider, database device 210 generates a response and transmits the response to the provider, such as database device 110 transmitting response 170 to provider 150. For example, and using the example above where database device 210 receives a request from Provider #5 for John Doe's entitlements, database device 210 would generate a response that would include Movie #2 from Provider #2, Movie #4 from Provider #4, Movie #5 from Provider #5, Movie #6 from Provider #6, Movie #7 from Provider #1, Movie #8 from Provider #4, and Movie # 9 from Provider #5. Database device 110 would then transmit the response to Provider #5.

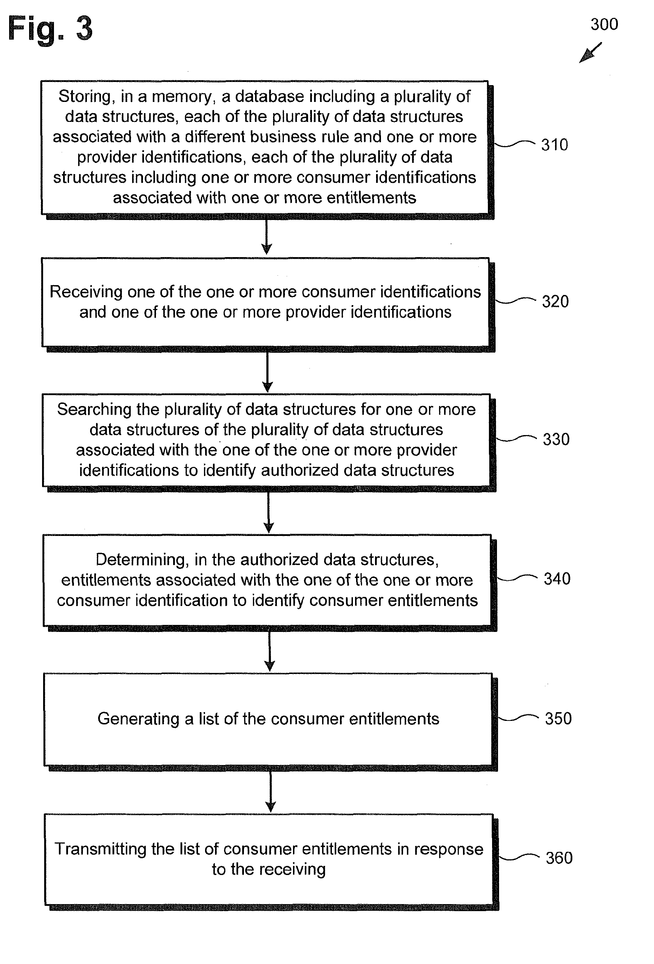

Figure 3 shows a flowchart illustrating a method for determining consumer entitlements for playback interoperability, according to one implementation of the present disclosure. The approach and technique indicated by flowchart 300 are sufficient to describe at least one implementation of the present disclosure, however, other implementations of the disclosure may utilize approaches and techniques different from those shown in flowchart 300. Furthermore, while flowchart 300 is described with respect to Figures 1 and 2, the disclosed inventive concepts are not intended to be limited by specific features shown and described with respect to Figures 1 and 2. Furthermore, with respect to the method illustrated in Figure 3, it is noted that certain details and features have been left out of flowchart 300 in order not to obscure the discussion of inventive features in the present application.

Referring now to flowchart 300 of Figure 3, flowchart 300 includes storing, in a memory, a database including a plurality of data structures, each of the plurality of data structures associated with a different business rule and one or more provider identifications, each of the plurality of data structures including one or more consumer identifications associated with one or more entitlements (310). For example, processor 111 of database device 110/210 may store, in memory 113, database 114 including domains 120/220. As discussed above, domains 120/220 may be associated with business rules and one or more providers 130. Furthermore, domains 120/220 may include one or more consumers 135 associated with one or more entitlements 140. As further discussed above, domains 120/220 may record providers 130/230 and consumers 135 using provider identifications and consumer identifications, respectively.

Flowchart 300 also includes receiving one of the one or more consumer identifications and one of the one or more provider identifications (320). For example, processor 111 of database device 110/210 may receive request 160 from provider 150, where request 160 includes consumer identification 162 and provider identification 161. In such an example, consumer identification 162 and provider identification 161 would correspond to a consumer identification of one of consumers 135 and a provider identification of one of providers 130/230, respectively.

For example, and using the implementation of Figure 2 discussed above where database device 110/210 is receiving request 160 for John Doe's entitlements from Provider #5, Provider #5 would transmit request 160 to database device 110/210. Consumer identification 162 of request 160 would include the identity of John Doe, and provider identification 161 of request 160 would include the identification of Provider #5, such as Amazon.

Flowchart 300 also includes searching the plurality of data structures for one or more data structures associated with the one of the one or more provider identifications to identify authorized data structures (330). For example, provider 111 of database device 110/210 may search domains 120/220 for one or more domains associated with provider identification 161 to identify authorized domains. In the example of Figure 2 where database device 110/210 receives request 160 from Provider #5 for John Doe's entitlements, database device 110/210 may identify that domain 120b/220b, domain 120c/220c, and domain 120d/220d are authorized domains using the identify of Provider #5.

Flowchart 300 also includes determining, in the authorized data structures, entitlements associated with the one of the one or more consumer identifications to identify consumer entitlements (340). For example, processor 111 of database device 110/210 may determine, from the authorized data structures, entitlements from entitlements 135 associated with consumer identification 162 to identify consumer entitlements. In the example of Figure 2 where database device 110/210 receives request 160 from Provider #5 for John Doe's entitlements, database device 110/210 may determine John Doe's entitlements from domain 120b/220b, domain 120c/220c, and domain 120d/220d using consumer identification 162, where consumer identification 162 would correspond to John Doe's identification. As such, database device 110/210 would determine that John Doe's entitlements include Movie #2 from Provider #2, Movie #4 from Provider #4, Movie #5 from Provider #5, Movie #6 from Provider #6, Movie #7 from Provider #1, Movie #8 from Provider #4, and Movie # 9 from Provider #5.

Flowchart 300 also includes generating a list of the consumer entitlements (350). For example, processor 111 of database device 110/210 may generate response 170 using the consumer entitlements, where response 170 includes transaction information 172. In the example of Figure 2 where database device 110/210 receives request 160 for Provider #5 for John Doe's entitlements, transaction information 172 would include Movie #2 from Provider #2, Movie #4 from Provider #4, Movie #5 from Provider #5, Movie #6 from Provider #6, Movie #7 from Provider #1, Movie #8 from Provider #4, and Movie # 9 from Provider #5.

Flowchart 300 also includes transmitting the list of the consumer entitlements in response to the receiving (360). For example, processor 111 of database device 110/210 may transmit response 170 to provider 150 in response to receiving request 160 from provider 150.

From the above description it is manifest that various techniques can be used for implementing the concepts described in the present application without departing from the scope of those concepts. Moreover, while the concepts have been described with specific reference to certain implementations, a person of ordinary skill in the art would recognize that changes can be made in form and detail without departing from the scope of those concepts. As such, the described implementations are to be considered in all respects as illustrative and not restrictive. It should also be understood that the present application is not limited to the particular implementations described above, but many rearrangements, modifications, and substitutions are possible without departing from the scope of the present disclosure.

## Claims

1. A method of obtaining consumer entitlements from a database, the database including a plurality of data structures, each of the plurality of data structures associated with a different business rule and one or more provider identifications, each of the plurality of data structures includes one or more consumer identifications associated with one or more entitlements, the method comprising:
receiving one of the one or more consumer identifications and one of the one or more provider identifications;
searching the plurality of data structures for one or more data structures associated with the one of the one or more provider identifications to identify authorized data structures;
determining, in the authorized data structures, entitlements associated with the one of the one or more consumer identifications to identify the consumer entitlements;
generating a list of the consumer entitlements; and
transmitting the list of the consumer entitlements in response to the receiving.

2. The method of claim 1, wherein the consumer entitlements correspond to entitlements purchased by a consumer corresponding to the one of the one or more consumer identifications.

3. The method of claim 1, wherein the one or more entitlements include at least one of movies, games, apps, digital books and music.

4. The method of claim 1, wherein the one of the one or more consumer identifications and the one of the one or more provider identifications is received from a provider corresponding to the one of the one or more provider identifications, and wherein the list is transmitted to the provider.

5. The method of claim 1, wherein each of the plurality of data structures is associated with a title owner.

6. The method of claim 1, wherein the different business rule includes at least one of a geographic area, a premier provider, and a media type for the one or more entitlements.

7. The method of claim 1, wherein the one of the one or more consumer identifications includes a global consumer identification corresponding to all provider identifications.

8. The method of claim 1, wherein the one of the one or more consumer identifications is specific to the one of the one or more provider identifications.

9. The method of claim 1, wherein the list of the consumer entitlements further includes providers of the consumer entitlements.

10. The method of claim 1, wherein the one of the one or more consumer identifications and the one of the one or more provider identifications is received wirelessly.

11. A system comprising:
a database including a plurality of data structures:
each of the plurality of data structures is associated with a different business rule;
each of the plurality of data structures is further associated with one or more provider identifications;
each of the plurality of data structures includes one or more consumer identifications associated with one or more entitlements; and
a processor configured to:
receive one of the one or more consumer identifications and one of the one or more provider identifications;
search the plurality of data structures for one or more data structures associated with the one of the one or more provider identifications to identify authorized data structures;
in the authorized data structures, determine entitlements associated with the one of the one or more consumer identifications to identify consumer entitlements;
generate a list of the consumer entitlements; and
transmit the list of the consumer entitlements in response to the receiving.

12. The system of claim 11, wherein the consumer entitlements correspond to entitlements purchased by a consumer corresponding to the one of the one or more consumer identifications.

13. The system of claim 11, wherein the one or more entitlements include at least one of movies, games, apps, digital books and music.

14. The system of claim 11, wherein the one of the one or more consumer identifications and the one of the one or more provider identifications is received from a provider corresponding to the one of the one or more provider identifications, and wherein the list is transmitted to the provider.

15. The system of claim 11 further comprising:
each of the plurality of data structures is associated with a title owner, or
the different business rule includes at least one of a geographic area, a premier provider, and a media type for the one or more entitlements, or
the one of the one or more consumer identifications includes a global consumer identification corresponding to all provider identifications, or
the one of the one or more consumer identifications is specific to the one of the one or more provider identifications, or
the list of the consumer entitlements further includes providers of the consumer entitlements, or
the one of the one or more consumer identifications and the one of the one or more provider identifications is received wirelessly.
